# EUROPEAN PATENT APPLICATION

(11) **EP 4 590 044 A1**
(43) Date of publication of application: **23.07.2025**
(21) Application number: 23893177.8
(22) Date of filing: 30.06.2023
(51) Int. Cl.: H04W 72/04

(54) **COMMUNICATION METHOD AND COMMUNICATION APPARATUS**

(30) Priority: 22.11.2022 CN 202211463387
(71) Applicant: Huawei Technologies Co., Ltd., Shenzhen, Guangdong 518129 (CN)
(72) Inventor: WU, Kuan, Shenzhen, Guangdong 518129 (CN); HUANG, Lei, Shenzhen, Guangdong 518129 (CN); QIAN, Bin, Shenzhen, Guangdong 518129 (CN); YANG, Xun, Shenzhen, Guangdong 518129 (CN)
(74) Representative: Grünecker Patent- und Rechtsanwälte PartG mbB
(86) International application number: PCT/CN2023/104879
(87) International publication number: WO 2024/109077

(57) **Abstract**

This application provides a communication method and a communication apparatus. The method is applied to an ultra-wideband-based wireless personal area network system that includes an 802.15 series protocol, for example, an 802.15.4a protocol, an 802.15.4z protocol, or an 802.15.4ab protocol. The method includes: A first communication apparatus determines a first information element, where the first information element includes at least one of first information and second information, the first information is used to configure a first sequence, the first sequence is used for initial synchronization of a second communication apparatus, the second information is used to configure a second sequence, and the second sequence is used in a first measurement process between the first communication apparatus and the second communication apparatus; and the first communication apparatus sends the first information element to the second communication apparatus. In this way, the second communication apparatus can complete preamble configuration for initial synchronization and/or preamble configuration for the first measurement process based on the first information element.

## Description

This application claims priority to Chinese Patent Application No. 202211463387.5, filed with the China National Intellectual Property Administration on November 22, 2022 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

Compared with the conventional wireless communication technology, an ultra-wideband (ultra-wideband, UWB) communication system can achieve higher ranging and positioning precision that can reach a centimeter level. In the UWB communication system, an impulse with a pulse width of only a nanosecond level is used as a basic signal of the UWB communication system. Therefore, the UWB communication system features a high transmission rate, a large system capacity, and the like.

Currently, for a UWB device that supports the 802.15.4ab protocol, both initial synchronization and a ranging process of the UWB device need to be performed based on corresponding preamble. However, an existing preamble configuration manner cannot enable the UWB device that supports the 802.15.4ab protocol to complete preamble configuration for initial synchronization and/or preamble configuration for the ranging process.

### SUMMARY

This application provides a communication method and a communication apparatus, to support a UWB device in completing preamble configuration for initial synchronization and/or preamble configuration for a measurement process.

According to a first aspect, a communication method is provided, and the method includes: A first communication apparatus determines a first information element, where the first information element includes at least one of first information and second information, the first information is used to configure a first sequence, the first sequence is used for initial synchronization of a second communication apparatus, the second information is used to configure a second sequence, and the second sequence is used in a first measurement process between the first communication apparatus and the second communication apparatus; and the first communication apparatus sends the first information element to the second communication apparatus.

In this application, the first information and/or the second information are/is configured in the first information element, so that the second communication apparatus can be supported in correspondingly completing preamble configuration for initial synchronization and/or preamble configuration for the first measurement process based on the first information and/or the second information in the first information element.

In a possible implementation, the first information element further includes at least one of third information and fourth information, the third information indicates a type of the first sequence, and the fourth information indicates a type of the second sequence.

Therefore, the second communication apparatus determines the type of the corresponding first sequence and/or the type of the corresponding second sequence based on the third information and/or the fourth information in the first information element, to better generate a corresponding preamble sequence.

In a possible implementation, the first information element further includes fifth information, and the fifth information indicates a type of the first measurement process.

Therefore, the second communication apparatus determines type information of the first measurement process based on the fifth information of the first information element, to better complete the measurement process between the second communication apparatus and the first communication apparatus.

In a possible implementation, the type of the first measurement process includes at least one of the following: a non-multi-millisecond transmission based ranging process, a multi-millisecond transmission based ranging process, or a narrowband signal-assisted multi-millisecond transmission based ranging process.

In a possible implementation, the method further includes: The first communication apparatus sends a second information element to the second communication apparatus, where the second information element includes sixth information, and the sixth information indicates a number of ranging integrity fragments.

In this way, integrity protection verification may be performed through integrity fragmentation, to determine whether an attack occurs in a ranging process.

In a possible implementation, the second information element further includes seventh information, and the seventh information indicates whether a number of preamble fragments is to be updated.

In this way, the number of preamble fragments is dynamically updated, so that a receiving device and a sending device can better adapt to a dynamic change of a channel environment. In this way, measurement precision between the receiving device and the sending device is improved, or interference to another device is reduced.

In a possible implementation, the second information element further includes eighth information, where the eighth information indicates that a type of the multi-millisecond transmission is interlaced multi-millisecond transmission; or the eighth information indicates that a type of the multi-millisecond transmission is non-interlaced multi-millisecond transmission.

In a possible implementation, the method further includes: The first communication apparatus sends a third information element to the second communication apparatus, where the third information element is used in a second measurement process between the second communication apparatus and the first communication apparatus.

In a possible implementation, when the second communication apparatus supports the third information element and does not support the second information element, the second measurement process is based on the third information element; or when the second communication apparatus supports the third information element and the second information element, the second measurement process is based on the second information element and the third information element.

In a possible implementation, the method further includes: The first communication apparatus receives indication information from the second communication apparatus, where the indication information indicates whether the second communication apparatus supports at least one of a narrowband signal capability and a multi-millisecond transmission capability.

According to the foregoing technical solution, in this application, the first communication apparatus can learn whether the second communication apparatus supports the NB signal capability and the MMS capability. This helps the first communication apparatus make proper measurement configuration in a subsequent measurement process.

In a possible implementation, the method further includes: The first communication apparatus sends feedback information to the second communication apparatus, where the feedback information indicates that the second communication apparatus is not allowed to access a network.

According to a second aspect, a communication method is provided, including: A second communication apparatus receives a first information element from a first communication apparatus, where the first information element includes at least one of first information and second information, the first information is used to configure a first sequence, the first sequence is used for initial synchronization of the second communication apparatus, the second information is used to configure a second sequence, and the second sequence is used in a first measurement process between the first communication apparatus and the second communication apparatus; and the second communication apparatus determines at least one of the first sequence and the second sequence based on the first information element.

In a possible implementation, the first information element further includes at least one of third information and fourth information, the third information indicates a type of the first sequence, and the fourth information indicates a type of the second sequence.

In a possible implementation, the first information element further includes fifth information, and the fifth information indicates a type of the first measurement process.

In a possible implementation, the type of the first measurement process includes at least one of the following: a non-multi-millisecond transmission based ranging process, a multi-millisecond transmission based ranging process, or a narrowband signal-assisted multi-millisecond transmission based ranging process.

In a possible implementation, the method further includes: The second communication apparatus receives a second information element from the first communication apparatus, where the second information element includes sixth information, and the sixth information indicates a number of ranging integrity fragments.

In a possible implementation, the second information element further includes seventh information, and the seventh information indicates whether a number of preamble fragments is to be updated.

In a possible implementation, the second information element further includes eighth information, where the eighth information indicates that a type of the multi-millisecond transmission is interlaced multi-millisecond transmission; or the eighth information indicates that a type of the multi-millisecond transmission is non-interlaced multi-millisecond transmission.

In a possible implementation, the method further includes: The second communication apparatus receives a third information element from the first communication apparatus, where the third information element is used in a second measurement process between the second communication apparatus and the first communication apparatus.

In a possible implementation, when the second communication apparatus supports the third information element and does not support the second information element, the second measurement process is based on the third information element; or when the second communication apparatus supports the third information element and the second information element, the second measurement process is based on the second information element and the third information element.

In a possible implementation, before the second communication apparatus receives the first information element from the first communication apparatus, the method further includes: The second communication apparatus sends indication information to the first communication apparatus, where the indication information indicates whether the second communication apparatus supports at least one of a narrowband signal capability and a multi-millisecond transmission capability.

In a possible implementation, when the indication information indicates that the second communication apparatus does not support at least one of the narrowband signal capability and the multi-millisecond transmission capability, the method further includes: The second communication apparatus receives feedback information from the first communication apparatus, where the feedback information indicates that the second communication apparatus is not allowed to access a network.

According to a third aspect, a communication apparatus is provided, including: a processing unit, configured to determine a first information element, where the first information element includes at least one of first information and second information, the first information is used to configure a first sequence, the first sequence is used for initial synchronization of a second communication apparatus, the second information is used to configure a second sequence, and the second sequence is used in a first measurement process between the first communication apparatus and the second communication apparatus; and a transceiver unit, configured to send the first information element to the second communication apparatus.

In a possible implementation, the first information element further includes at least one of third information and fourth information, the third information indicates a type of the first sequence, and the fourth information indicates a type of the second sequence.

In a possible implementation, the first information element further includes fifth information, and the fifth information indicates a type of the first measurement process.

In a possible implementation, the type of the first measurement process includes at least one of the following: a non-multi-millisecond transmission based ranging process, a multi-millisecond transmission based ranging process, or a narrowband signal-assisted multi-millisecond transmission based ranging process.

In a possible implementation, the transceiver unit is further configured to send a second information element to the second communication apparatus, where the second information element includes sixth information, and the sixth information indicates a number of ranging integrity fragments.

In a possible implementation, the second information element further includes seventh information, and the seventh information indicates whether a number of preamble fragments is to be updated.

In a possible implementation, the second information element further includes eighth information, where the eighth information indicates that a type of the multi-millisecond transmission is interlaced multi-millisecond transmission; or the eighth information indicates that a type of the multi-millisecond transmission is non-interlaced multi-millisecond transmission.

In a possible implementation, the transceiver unit is further configured to send a third information element to the second communication apparatus, where the third information element is used in a second measurement process between the second communication apparatus and the first communication apparatus.

In a possible implementation, when the second communication apparatus supports the third information element and does not support the second information element, the second measurement process is based on the third information element; or when the second communication apparatus supports the third information element and the second information element, the second measurement process is based on the second information element and the third information element.

In a possible implementation, the transceiver unit is further configured to receive indication information from the second communication apparatus, where the indication information indicates whether the second communication apparatus supports at least one of a narrowband signal capability and a multi-millisecond transmission capability.

In a possible implementation, the transceiver unit is further configured to send feedback information to the second communication apparatus, where the feedback information indicates that the second communication apparatus is not allowed to access a network.

According to a fourth aspect, a communication apparatus is provided, including: a transceiver unit, configured to receive a first information element from a first communication apparatus, where the first information element includes at least one of first information and second information, the first information is used to configure a first sequence, the first sequence is used for initial synchronization of the communication apparatus, the second information is used to configure a second sequence, and the second sequence is used in a first measurement process between the first communication apparatus and the communication apparatus; and a processing unit, configured to determine at least one of the first sequence and the second sequence based on the first information element.

In a possible implementation, the first information element further includes at least one of third information and fourth information, the third information indicates a type of the first sequence, and the fourth information indicates a type of the second sequence.

In a possible implementation, the first information element further includes fifth information, and the fifth information indicates a type of the first measurement process.

In a possible implementation, the type of the first measurement process includes at least one of the following: a non-multi-millisecond transmission based ranging process, a multi-millisecond transmission based ranging process, or a narrowband signal-assisted multi-millisecond transmission based ranging process.

In a possible implementation, the transceiver unit is further configured to receive a second information element from the first communication apparatus, where the second information element includes sixth information, and the sixth information indicates a number of ranging integrity fragments.

In a possible implementation, the second information element further includes seventh information, and the seventh information indicates whether a number of preamble fragments is to be updated.

In a possible implementation, the second information element further includes eighth information, where the eighth information indicates that a type of the multi-millisecond transmission is interlaced multi-millisecond transmission; or the eighth information indicates that a type of the multi-millisecond transmission is non-interlaced multi-millisecond transmission.

In a possible implementation, the transceiver unit is further configured to receive a third information element from the first communication apparatus, where the third information element is used in a second measurement process between the communication apparatus and the first communication apparatus.

In a possible implementation, when the communication apparatus supports the third information element and does not support the second information element, the second measurement process is based on the third information element; or when the communication apparatus supports the third information element and the second information element, the second measurement process is based on the second information element and the third information element.

In a possible implementation, the transceiver unit is further configured to send indication information to the first communication apparatus, where the indication information indicates whether the communication apparatus supports at least one of a narrowband signal capability and a multi-millisecond transmission capability.

In a possible implementation, the transceiver unit is further configured to receive feedback information from the first communication apparatus, where the feedback information indicates that the communication apparatus is not allowed to access a network.

According to a fifth aspect, a communication apparatus is provided, including a processor. The processor is coupled to a memory, and the processor is configured to execute a computer program or instructions, to enable the communication apparatus to perform the method according to any one of the first aspect and the possible implementations of the first aspect, or enable the communication apparatus to perform the method according to any one of the second aspect and the possible implementations of the second aspect.

According to a sixth aspect, a communication apparatus is provided, including a logic circuit and an input/output interface. The logic circuit is configured to execute a computer program or instructions, to enable the communication apparatus to perform the method according to any one of the first aspect and the possible implementations of the first aspect, or enable the communication apparatus to perform the method according to any one of the second aspect and the possible implementations of the second aspect.

According to a seventh aspect, a computer-readable storage medium is provided, including a computer program or instructions. When the computer program or the instructions are run on a computer, the computer is enabled to perform the method according to any one of the first aspect and the possible implementations of the first aspect, or the computer is enabled to perform the method according to any one of the second aspect and the possible implementations of the second aspect.

According to an eighth aspect, a computer program product is provided, including instructions. When the instructions are run on a computer, the computer is enabled to perform the method according to any one of the first aspect and the possible implementations of the first aspect, or the computer is enabled to perform the method according to any one of the second aspect and the possible implementations of the second aspect.

### BRIEF DESCRIPTION OF DRAWINGS

FIG. 1 is a diagram of a communication system 100 to which an embodiment of this application is applicable;
FIG. 2 is a diagram of a structure of an information element #S used for preamble configuration;
FIG. 3 is a diagram of phases of a UWB ranging round;
FIG. 4 is an interaction flowchart of a communication method 400 according to an embodiment of this application;
FIG. 5 is a diagram of a type of MMS ranging according to an embodiment of this application;
FIG. 6 is a diagram of a structure of a first information element according to an embodiment of this application;
FIG. 7 is a diagram of a structure of a second information element according to an embodiment of this application;
FIG. 8 is a diagram of a structure of indication information according to an embodiment of this application;
FIG. 9 is a diagram of a structure of a communication apparatus 900 according to an embodiment of this application;
FIG. 10 is a diagram of a structure of a communication apparatus 1000 according to an embodiment of this application;
FIG. 11 is a diagram of a structure of a communication apparatus 1100 according to an embodiment of this application;
FIG. 12 is a diagram of a structure of a communication apparatus 1200 according to an embodiment of this application; and
FIG. 13 is a diagram of a structure of a communication apparatus 1300 according to an embodiment of this application.

### DESCRIPTION OF EMBODIMENTS

The following describes technical solutions of this application with reference to accompanying drawings.

The technical solutions of this application may be applied to a wireless personal area network (wireless personal area network, WPAN). Currently, a standard used for the WPAN is the institute of electrical and electronics engineers (institute of electrical and electronics engineers, IEEE) 802.15 series. The WPAN may be used for communication between digital auxiliary devices in a small range, such as a telephone, a computer, and an auxiliary device. Technologies that support the wireless personal area network include Bluetooth (Bluetooth), ZigBee (ZigBee), ultra-wideband (ultra-wideband, UWB), an infrared data association (infrared data association, IrDA) connection technology, home radio frequency (home radio frequency, HomeRF), and the like. From a perspective of network composition, the WPAN is located at a bottom layer of an entire network architecture and is for a wireless connection between devices in a small range, that is, a point-to-point short-range connection, and may be considered as a short-range wireless communication network. Based on different application scenarios, WPANs are further classified into high rate (high rate, HR)-WPANs and low rate (low rate, LR)-WPANs. The HR-WPAN may be used to support various high-rate multimedia applications, including high-quality audio and video delivery, multi-megabyte music and image document transmission, and the like. The LR-WPAN may be for common services in daily life.

In the WPAN, devices may be classified into a full-function device (full-function device, FFD) and a reduced-function device (reduced-function device, RFD) based on communication capabilities of the devices. The FFDs can communicate with each other and an FFD can communicate with an RFD. The RFDs cannot directly communicate with each other. An RFD can communicate only with an FFD or forward data through one FFD. The FFD associated with the RFD is referred to as a coordinator (coordinator) of the RFD. The RFD is mainly used for simple control application, for example, a light switch and a passive infrared sensor. A small amount of data is transmitted, and small quantities of transmission resources and communication resources are occupied. Therefore, costs of the RFD are low. The coordinator may also be referred to as a personal area network (personal area network, PAN) coordinator, a central control node, or the like. The PAN coordinator is a main control node of an entire network, and each ad hoc network can have only one PAN coordinator, which has functions of member identity management, link information management, and packet forwarding.

Optionally, a device (for example, a sending device or a receiving device) in embodiments of this application may be a device supporting the 802.15 series, for example, a device supporting a plurality of WPAN standards such as a 802.15.4a protocol, a 802.15.4z protocol, and a WPAN standard under discussion or a WPAN standard in a subsequent version.

Optionally, this application may be applied to a UWB-based WPAN system, including an 802.15 series protocol, for example, an 802.15.4a protocol, an 802.15.4z protocol, or an 802.15.4ab protocol, and may also support a next-generation Wi-Fi protocol, for example, 802.11be, Wi-Fi 7, or EHT, of IEEE 802.11ax, and 802.11b.

In embodiments of this application, the device may be a communication server, a router, a switch, a bridge, a computer, a mobile phone, a home smart device, a vehicle-mounted communication device, or the like.

In embodiments of this application, the device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not specially limited in embodiments of this application, provided that a program that records code of the method provided in embodiments of this application can be run to perform communication according to the method provided in embodiments of this application. For example, the method provided in embodiments of this application may be performed by the FFD or the RFD, or a functional module that is in the FFD or the RFD and that can invoke and execute a program.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD), a digital versatile disc (digital versatile disc, DVD)), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry an instruction and/or data.

The technical solutions of this application may be further applicable to a wireless local area network system like an internet of things (internet of things, IOT) network or a vehicle-to-everything (vehicle to x, V2X) network. This application may be further applicable to another possible communication system, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5^{th} generation (5^{th} generation, 5G) communication system, and a 6^{th} generation (6^{th} generation, 6G) communication system.

The foregoing communication systems to which this application is applicable are merely examples for description, and communication systems to which this application is applicable are not limited thereto. This is uniformly described herein, and details are not described below again.

The terminal in embodiments of this application may be a device having a wireless transceiver function, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a personal digital assistant (personal digital assistant, PDA), customer-premises equipment (customer-premises equipment, CPE), a smart point of sale (point of sale, POS) machine, a handheld device having a wireless communication function, a computing device or another processing device connected to a wireless modem, a vehicle-mounted device, a communication device carried on a high altitude aircraft, a wearable device, an uncrewed aerial vehicle, a robot, a terminal in device-to-device (device-to-device, D2D) communication, a terminal in V2X, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in an evolved communication network after 5G, or the like. This is not limited in embodiments of this application.

In embodiments of this application, an apparatus configured to implement a function of the terminal device may be the terminal device, or may be an apparatus that can support the terminal device in implementing the function, for example, a chip system. The apparatus may be mounted in a terminal device or used in cooperation with a terminal device. In embodiments of this application, the chip system may include a chip, or may include a chip and another discrete component.

The network device in embodiments of this application is a device having a wireless transceiver function, and is configured to communicate with the terminal device. An access network device may be a node in a radio access network (radio access network, RAN), and may be referred to as a base station, or may be referred to as a RAN node. The access network device may be an evolved NodeB (evolved NodeB, eNB or eNodeB) in LTE, a base station in a 5G network like a gNodeB (gNB), a base station in an evolved public land mobile network (public land mobile network, PLMN) after 5G, a broadband network gateway (broadband network gateway, BNG), an aggregation switch, a 3^{rd} generation partner project (3^{rd} generation partnership project, 3GPP) access device, or the like.

The network device in embodiments of this application may further include base stations in various forms, for example, a macro base station, a micro base station (also referred to as a small cell), a relay station, a transmitting and receiving point (transmitting and receiving point, TRP), a transmission point (transmission point, TP), a mobile switching center, and a device or the like that undertakes a function of the base station in device-to-device (device-to-device, D2D) communication, vehicle-to-everything (vehicle-to-everything, V2X) communication, and machine-to-machine (machine-to-machine, M2M) communication. The network device may further include a central unit (central unit, CU) and a distributed unit (distributed unit, DU) in a cloud radio access network (cloud radio access network, C-RAN) system, and a network device in an NTN communication system. This is not specifically limited in embodiments of this application.

In embodiments of this application, an apparatus configured to implement a function of the network device may be the network device, or may be an apparatus that can support the network device in implementing the function, for example, a chip system. The apparatus may be mounted in the network device or used in cooperation with the network device. In embodiments of this application, the chip system may include a chip, or may include a chip and another discrete component.

The following describes, with reference to the accompanying drawings, an applicable communication system related to the technical solutions disclosed in this application.

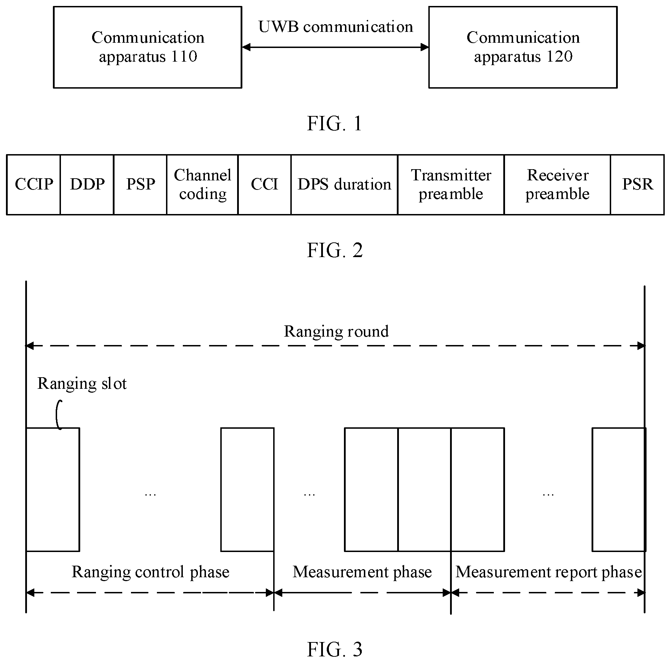

FIG. 1 is a diagram of a communication system 100 to which an embodiment of this application is applicable. As shown in FIG. 1, the communication system 100 includes a communication apparatus 110 and a communication apparatus 120. A number of communication apparatuses included in the communication system 100 is not limited in this application. The communication apparatus 110 and the communication apparatus 120 may be any terminal device listed above, or may be any network device listed above. This is not limited in this application. It should be understood that FIG. 1 is merely an example for understanding, and cannot limit the protection scope claimed in this application.

In FIG. 1, UWB communication can be performed between the communication apparatus 110 and the communication apparatus 120. For example, the UWB communication includes transmission applications such as sensing, ranging, positioning, and communication. An example in which UWB transmission is ranging is used for description. In a ranging scenario, the communication apparatus 110 may serve as an initiator (initiator) (the initiator is a UWB device that can initiate a UWB ranging process, and may be a transmitter/receiver), and the communication apparatus 120 may serve as a responder (responder) (the responder is a UWB device that responds to a ranging process initiated by the initiator, and may be a receiver/transmitter.)

In FIG. 1, both the communication apparatus 110 and the communication apparatus 120 may be UWB devices that support the 802.15.4z protocol, or may be UWB devices that support the 802.15.4ab protocol, or may be UWB devices that support another protocol. This is not limited in this application. For ease of description, an example in which both the communication apparatus 110 and the communication apparatus 120 are UWB devices that support the 802.15.4ab protocol is used for description in this application, but another scenario is not limited.

As described above, the communication apparatus that supports UWB communication needs to perform preamble configuration for initial synchronization and preamble configuration for a ranging process. For example, the communication apparatus 110 performs initial synchronization based on first preamble, and performs a ranging process based on second preamble. Configuration information of the first preamble and configuration information of the second preamble need to be configured and sent by the communication apparatus 110 serving as the initiator. For a configuration manner of the preamble, refer to FIG. 2.

FIG. 2 is a diagram of a structure of an information element (Information Element, IE) #S used for preamble configuration. As shown in FIG. 2, the information element #S includes a channel configuration interval presence (channel configuration interval presence, CCIP) field, a dynamic preamble selection (dynamic preamble selection, DPS) duration presence (DPS duration presence, DDP) field, a preamble sequence selection presence (preamble sequence selection presence, PSP) field, a channel number (channel number) field, a CCI field, a DPS field, a transmitter preamble code (Tx preamble code) field, a receiver preamble code (Rx preamble code) field, and a preamble symbol repetitions (preamble symbol repetitions, PSR) field.

Specifically, the CCIP field indicates whether the CCI field exists, the DDP field indicates whether the DPS duration field exists, and the PSP field indicates whether a field related to preamble sequence selection exists. Fields related to preamble sequence selection include the transmitter preamble code field, the receiver preamble code field, and the PSR field. The channel number field indicates a number of a UWB channel, the CCI field indicates channel configuration interval information, the DPS duration field indicates a length of duration of DPS, and the PSR field indicates preamble symbol repetitions.

The transmitter preamble code field indicates an index value, and the index value corresponds to a preamble sequence that is used by a transmitter (a sending device of the information element #S) to send a UWB signal in an upcoming ranging process. The receiver preamble code field also indicates an index value, and the index value corresponds to a preamble sequence that is used by a receiver (a receiving device of the information element #S) to receive a UWB signal in an upcoming ranging process. Types of preamble sequences indicated by the transmitter preamble field and the receiver preamble field are both preamble sequences based on an Ipatov sequence, and the Ipatov sequence includes an Ipatov sequence defined in the existing 802.15.4z protocol.

It may be understood that initial synchronization of the UWB device includes two types: initial synchronization based on a UWB signal and initial synchronization based on a narrowband (narrowband, NB) signal. For the initial synchronization based on the UWB signal, a performance requirement for a preamble sequence for initial synchronization is different from that for a ranging process (the following uses an example in which the ranging process is multi-millisecond (multi-millisecond, MMS) transmission for description), and different preamble sequences may be respectively configured for the initial synchronization process and the MMS ranging process. For example, for the initial synchronization, a preamble sequence based on an Ipatov sequence may be selected. This is not limited herein. For the MMS ranging process, a preamble sequence based on a Golay sequence may be selected, or a preamble sequence based on a complementary zero-sum cross-correlation code block (complementary zero-sum cross-correlation code block, CZC) may be selected, or a preamble sequence based on an Ipatov sequence may be selected. This is not limited herein.

It can be learned from the foregoing that the preamble sequence based on the Ipatov sequence may be configured for both the initial synchronization process and the MMS ranging process of the UWB device. When receiving the information element #S, a UWB device that supports the 802.15.4ab protocol may not be able to distinguish a purpose of a preamble sequence indicated by the information element #S, in other words, it cannot be determined whether the preamble sequence based on the Ipatov sequence is used for the initial synchronization or used for the MMS ranging process.

In view of the foregoing technical problem, this application provides an ultra-wideband communication method and a communication apparatus, to support a UWB device in completing preamble configuration for initial synchronization and/or preamble configuration for a measurement process.

For ease of understanding of the technical solutions in embodiments of this application, some terms or concepts that may be used in embodiments of this application are first briefly described.

Ranging round (ranging round): In a previous-generation IEEE 802.15.4z standard, a single ranging process is defined as a ranging round. A minimum processing time unit of each ranging round is a ranging slot (ranging slot). One ranging round is classified into three phases: a ranging control phase (ranging control phase), a ranging phase (ranging phase), and a ranging result report phase (measurement report phase). FIG. 3 is a diagram of the phases of the UWB ranging round. It can be seen from FIG. 3 that, in the IEEE 802.15.4z standard, the ranging control phase includes one ranging slot, while in the IEEE 802.15.4ab standard currently under discussion, the ranging control phase may include more than one ranging slot.

Measurement includes a measurement process, like ranging, sensing, positioning or communication performed based on a UWB signal. Correspondingly, for example, when measurement is ranging, a corresponding measurement round is a ranging round. For another example, when measurement is sensing, a corresponding measurement round is a sensing round.

In this application, a "fragment (fragment or segment) signal" in this application may also be referred to as a "block signal", a "short signal", a "partial signal", a "fragment", a "block", or the like. A name of the fragment signal is not limited, provided that the fragment signal can be used to identify that a UWB signal is divided into a plurality of UWB signals, a time length of each of the plurality of UWB signals obtained through division is less than 1 millisecond, and one UWB signal obtained through division is sent in each millisecond. Optionally, a plurality of fragment signals obtained by dividing the UWB signal may be the same. For example, the plurality of fragment signals obtained by dividing the UWB signal are preambles (preambles) with a same configuration. The preambles with the same configuration include but are not limited to a preamble length, a sequence used by the preamble, and the like. The preamble is a group of sequences, and may be used to identify a device identity and/or perform channel state measurement when a device interacts with another device or accesses a network.

In addition, a "frame structure (frame structure)" in this application may also be referred to as a "frame format (frame format)", or the like. A name of the frame structure is not limited, provided that the frame structure can be used to represent a signal frame feature like a structure/format of a UWB signal frame.

The following describes the ultra-wideband communication method in embodiments of this application with reference to the accompanying drawings.

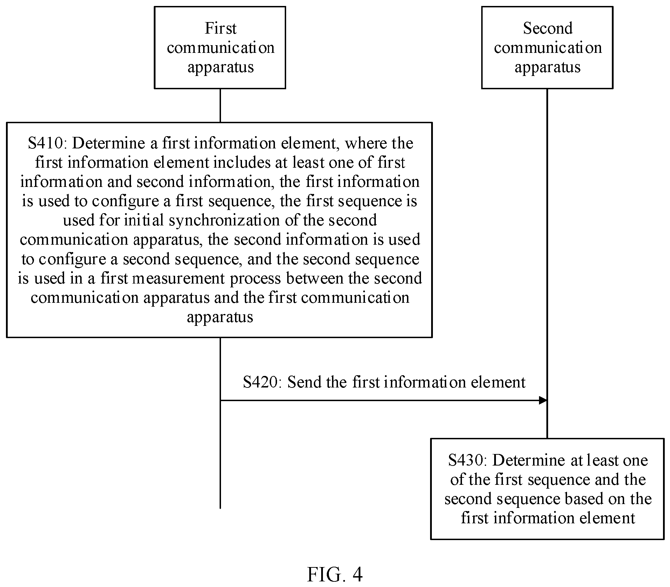

FIG. 4 is an interaction flowchart of a communication method 400 according to an embodiment of this application. The method 400 may be performed by a first communication apparatus and a second communication apparatus, or may be performed by a module and/or a component (for example, a chip or an integrated circuit) that has a corresponding function and that is installed in the first communication apparatus and the second communication apparatus. This is not limited in this application. The first communication apparatus may be a network device or a terminal device, and the second communication apparatus may be a network device or a terminal device. This is not limited in this application either. The following uses the first communication apparatus and the second communication apparatus as an example for description. As shown in FIG. 4, the method 400 includes the following steps.

S410: The first communication apparatus determines a first information element, where the first information element includes at least one of first information and second information, the first information is used to configure a first sequence, the first sequence is used for initial synchronization of the second communication apparatus, the second information is used to configure a second sequence, and the second sequence is used in a first measurement process between the first communication apparatus and the second communication apparatus.

Specifically, that the first information element includes at least one of the first information and the second information may be: The first information element includes the first information; or the first information element includes the second information; or the first information element includes the first information and the second information.

It should be understood that the first information can be used to configure the first sequence, and the first sequence can be used for initial synchronization of the second communication apparatus. In other words, the first information can be used by the second communication apparatus to perform preamble configuration for initial synchronization. The second information can be used to configure the second sequence, and the second sequence can be used in the first measurement process between the second communication apparatus and the first communication apparatus. In other words, the second information can be used by the second communication apparatus to perform preamble configuration for the first measurement process.

In a possible implementation, the first measurement process includes at least one of the following: a ranging process, a sensing process, or a positioning process. For ease of description, the following uses an example in which the first measurement process is a ranging process for description.

In a possible implementation, the first sequence may further include a first preamble sequence, a first preamble field, a first preamble symbol, or another alternative or similar expression. Similarly, the second sequence may further include a second preamble sequence, a second preamble field, a second preamble symbol, or an alternative or similar expression.

S420: The first communication apparatus sends the first information element to the second communication apparatus.

Correspondingly, the second communication apparatus receives the first information element from the first communication apparatus.

S430: The second communication apparatus determines at least one of the first sequence and the second sequence based on the first information element.

Specifically, the first information element includes the first information, and the second communication apparatus determines the first sequence based on the first information, to complete preamble configuration for initial synchronization. The first information element includes the second information, and the second communication apparatus determines the second sequence based on the second information, to complete preamble configuration for the first measurement process. The first information element includes the first information and the second information. The second communication apparatus determines the first sequence based on the first information, and determines the second sequence based on the second information, to complete preamble configuration for initial synchronization and preamble configuration for the first measurement process.

As described above, after receiving an information element #S, the second communication apparatus may not be able to distinguish a purpose of a preamble sequence indicated by the information element #S. For example, whether the preamble sequence indicated by the information element #S is used for initial synchronization or used for the first measurement process cannot be determined. Therefore, the second communication apparatus cannot complete the preamble configuration for the initial synchronization and/or the preamble configuration for the first measurement process based on the information element #S.

In conclusion, in this application, the first information and/or the second information are/is configured in the first information element, so that the second communication apparatus can be supported in correspondingly completing the preamble configuration for the initial synchronization and/or the preamble configuration for the first measurement process based on the first information and/or the second information in the first information element.

In a possible implementation, the first information element further includes at least one of third information and fourth information.

Specifically, the first information element includes the first information, and the first information element may further include the third information, which indicates a type of the first sequence. The first information element includes the second information, and the first information element may further include the fourth information, which indicates a type of the second sequence. The first information element includes the first information and the second information, the first information element may further include the third information and the fourth information, and the third information and the fourth information respectively indicate a type of the first sequence and a type of the second sequence. Therefore, the second communication apparatus determines the type of the corresponding first sequence and/or the type of the corresponding second sequence based on the third information and/or the fourth information in the first information element, to better generate a corresponding preamble sequence.

In an example, the type of the first sequence may include an Ipatov sequence, and the type of the second sequence may include a Golay sequence, a CZC sequence, and an Ipatov sequence.

Optionally, the Golay sequence may further include two types: a Golay sequence supported by the 802.15.4ab protocol and a Golay sequence not supported by the 802.15.4ab protocol.

Optionally, the Ipatov sequence may further include three types: an Ipatov sequence supported by the 802.15.4ab protocol, an Ipatov sequence supported by the 802.15.4z protocol, and an Ipatov sequence not supported by the 802.15.4ab protocol and the 802.15.4z protocol.

Optionally, the CZC sequence may further include two types: a CZC sequence supported by the 802.15.4ab protocol and a CZC sequence not supported by the 802.15.4ab protocol.

In a possible implementation, the first information element further includes fifth information, and the fifth information indicates a type of the first measurement process.

Specifically, the type of the first measurement process includes: a non-MMS based ranging process, an MMS based ranging process, or an NB signal-assisted MMS ranging process. Therefore, the second communication apparatus determines type information of the first measurement process based on the fifth information of the first information element, to better complete the measurement process between the second communication apparatus and the first communication apparatus.

In a possible implementation, the method 400 further includes:
S440: The first communication apparatus sends a second information element to the second communication apparatus, where the second information element includes sixth information, and the sixth information indicates a number of ranging integrity fragments.

Correspondingly, the second communication apparatus receives the second information element from the first communication apparatus, and determines the number of ranging integrity fragments based on the sixth information.

In this way, integrity protection verification may be performed through integrity fragmentation, to determine whether an attack occurs in a ranging process.

In a possible implementation, the second information element further includes seventh information, and the seventh information indicates whether a number of preamble fragments is to be updated.

Correspondingly, the second communication apparatus can determine, based on the seventh information, whether to update the number of preamble fragments.

In this way, the number of preamble fragments is dynamically updated, so that a receiving device and a sending device can better adapt to a dynamic change of a channel environment. In this way, measurement precision between the receiving device and the sending device is improved, or interference to another device is reduced.

In a possible implementation, the second information element further includes eighth information, and the eighth information indicates an MMS type.

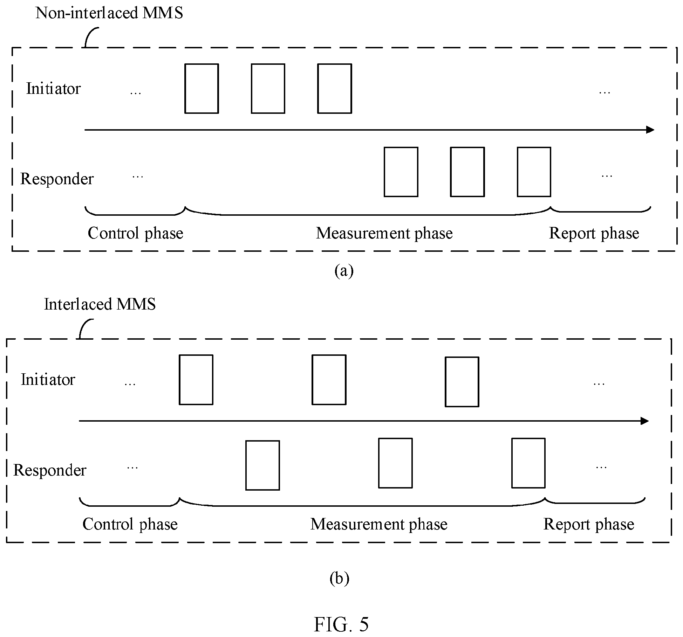

Specifically, the MMS type includes: interlaced MMS or non-interlaced MMS. For specific descriptions of the MMS type, refer to FIG. 5.

FIG. 5 is a diagram of a type of MMS ranging according to an embodiment of this application. As shown in (a) in FIG. 5, for non-interlaced MMS ranging (non-interlaced MMS ranging), an initiator may send a plurality of consecutive UWB signal blocks to a responder, and the responder may send a plurality of consecutive UWB signal blocks to the initiator. In addition, there is no interlacing between the UWB signal block sent by the initiator and the UWB signal block sent by the responder. In this application, a non-interlaced MMS ranging manner is used, so that a signal can be enhanced, and a UWB signal attenuation phenomenon in a long-distance or line-of-sight blocked scenario can be alleviated. As shown in (b) in FIG. 5, for interlaced MMS ranging (interlaced MMS ranging), the initiator and the responder alternately send UWB signal blocks to each other.

In a possible implementation, the method 400 may further include the following step.

S450: The first communication apparatus sends a third information element to the second communication apparatus, where the third information element is used in a second measurement process between the second communication apparatus and the first communication apparatus.

Correspondingly, the second communication apparatus receives the third information element from the first communication apparatus, and performs the second measurement process based on the third information element. For descriptions of the second measurement process, refer to the descriptions of the first measurement process. Details are not described herein again.

It should be understood that, in S450, the third information element may be an advanced ranging control information element (advanced ranging control information element, ARC IE), and can be used to configure, for the second communication apparatus, measurement information used in the second measurement process. For specific content of the ARC IE, refer to an existing protocol. Details are not described herein again.

In an example, when the second communication apparatus supports the third information element and does not support the second information element, the second measurement process is performed based on the third information element. When the second communication apparatus supports the third information element and the second information element, the second measurement process is performed based on the second information element and the third information element.

Specifically, if a ranging control message (ranging control message, RCM) sent by the first communication apparatus to the second communication apparatus includes the third information element (for example, an ARC IE), and does not include the second information element, the second measurement process between the first communication apparatus and the second communication apparatus is based on the third information element, that is, based on the 802.15.4z protocol. This also means that the second measurement process is a non-MMS ranging process. If an RCM sent by the first communication apparatus to the second communication apparatus includes the third information element and the second information element, and the second communication apparatus supports the second information element, the second measurement process between the first communication apparatus and the second communication apparatus is based on the third information element and the second information element (that is, the measurement process is performed according to a procedure specified in the 802.15.4ab protocol). If the second communication apparatus does not support the second information element, the second measurement process between the first communication apparatus and the second communication apparatus is based on the third information element (that is, the measurement process is performed according to a procedure specified in the 802.15.4z protocol).

In a possible implementation, the method 400 may further include the following steps.

S460: The second communication apparatus sends indication information to the first communication apparatus, where the indication information indicates whether the second communication apparatus supports at least one of a narrowband signal capability and a multi-millisecond transmission capability.

Correspondingly, the first communication apparatus receives the indication information from the second communication apparatus, and determines, based on the indication information, whether the second communication apparatus supports at least one of the NB signal capability and the MMS capability.

S470: The first communication apparatus sends feedback information to the second communication apparatus, where the feedback information indicates that the second communication apparatus is not allowed to access a network.

Correspondingly, the second communication apparatus receives the feedback information from the first communication apparatus, and determines, based on the feedback information, that the second communication apparatus is not allowed to access a network.

Specifically, when the second communication apparatus indicates, to the first communication apparatus by using the indication information, that the second communication apparatus does not support at least one of the NB signal capability and the MMS capability, the first communication apparatus sends the feedback information to the second communication apparatus, where the feedback information indicates, to the second communication apparatus, that the second communication apparatus is not allowed to access a network. A reason why the second network device is not allowed to access a network may be: The second communication apparatus does not support the NB signal capability and/or the second communication apparatus does not support the MMS capability.

According to the foregoing technical solution, in this application, the first communication apparatus can learn whether the second communication apparatus supports the NB signal capability and the MMS capability. This helps the first communication apparatus make proper measurement configuration in a subsequent measurement process.

It should be noted that, for the foregoing technical solutions such as S440 to S470, a sequence of steps S440 to S470 is not limited in this application. For example, S440 may be performed before S470, or S450 may be performed before S440.

The following further describes the method shown in FIG. 4 with reference to other accompanying drawings.

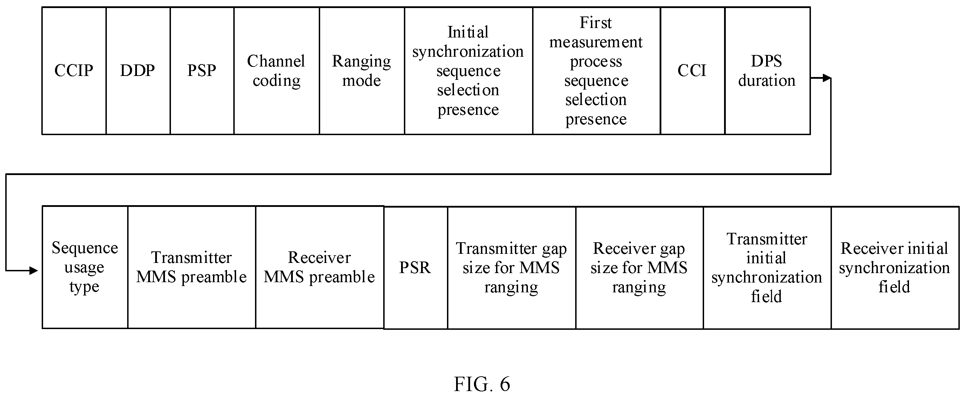

FIG. 6 is a diagram of a structure of a first information element according to an embodiment of this application. As shown in FIG. 6, the first information element includes a CCIP field, a DDP field, a PSP field, a channel number field, a ranging mode (ranging mode) field, an initial synchronization sequence selection presence (initial sync. sequence selection presence) field, an MMS ranging sequence selection presence (MMS ranging sequence selection presence) field, a CCI field, a DPS duration field, a sequence usage type (sequence usage type) field, a transmitter MMS code (Tx MMS code) field, a receiver MMS code (Rx MMS code) field, a PSR field, a transmitter gap size for MMS ranging (Tx Gap size for MMS ranging), a receiver gap size for MMS ranging (Rx Gap size for MMS ranging), a transmitter initial synchronization code (Tx initial sync. code) field, and a receiver initial synchronization code (Rx initial sync. code) field.

For descriptions of the sequence usage type field, refer to Table 1.

**Table 1 Sequence usage type field**

| 0-1 | 2-3 | 4-7 |
|---|---|---|
| Initial synchronization sequence type (Initial sync. sequence type) | MMS sequence type (MMS sequence type) | Reserved |

In Table 1, an initial synchronization sequence type field includes two bits, the initial synchronization sequence type field includes four values, and different values respectively indicate different meanings. For example, a first value (for example, 0) indicates that Ipatov sequences supported by the 802.15.4-2020 protocol and the 802.15.4z protocol are enabled. In this case, the transmitter initial synchronization field, the receiver initial synchronization field, and the PSR field all exist. A second value (for example, 1) indicates that an additional Ipatov sequence (namely, an Ipatov sequence that is not supported by the 802.15.4-2020 protocol and the 802.15.4z protocol) is enabled. In this case, the transmitter initial synchronization field, the receiver initial synchronization field, and the PSR field all exist. A third value (for example, 2) indicates that the field is not activated. Therefore, a value of the initial synchronization sequence selection presence field is 0, and a fourth value may be reserved. It should be understood that the foregoing description is merely an example for description, and is not intended as a final limitation.

In Table 1, an MMS sequence type field includes two bits, the MMS sequence type field includes four values, and different values respectively indicate different meanings. For example, a first value (for example, 0) indicates that a sequence based on a complementary set is enabled. The sequence based on the complementary set includes a Golay sequence and a CZC sequence. In this case, the transmitter MMS code field, the receiver MMS code field, and the PSR field all exist, a field of the transmitter gap size for MMS ranging and a field of the receiver gap size for MMS ranging all exist; and a second value (for example, 1) indicates that an Ipatov sequence is enabled. In this case, the transmitter MMS code field, the receiver MMS code field, and the PSR field all exist. A third value (for example, 2) indicates that the field is not activated. Therefore, a value of the MMS ranging sequence selection presence field is 0, and a fourth value may be reserved. It should be understood that the foregoing description is merely an example for description, and is not intended as a final limitation.

For descriptions of the ranging mode field, refer to Table 2.

**Table 2 Ranging mode field**

| Values | Meanings |
|---|---|
| 0 | Non-MMS based ranging (Non-MMS based ranging) |
| 1 | MMS based ranging (MMS based ranging) |
| 2 | NBA-MMS based ranging (NBA-MMS based ranging) |
| 3 | Reserved |

In Table 2, sequence configuration requirements that can be supported by different values of the ranging mode field are as follows:
✧ Value=0 indicates a preamble sequence configuration for initial synchronization.
✧ Value=1 indicates a preamble sequence configuration for initial synchronization and a preamble sequence configuration for an MMS ranging process.
✧ Value=2 indicates a preamble sequence configuration for an MMS ranging process.
✧ Value=3: reserved (reserved).

It should be understood that the foregoing description is merely an example for description, and is not intended as a final limitation.

A meaning of the initial synchronization sequence selection presence field in the first information element is as follows:
1) If the initial synchronization sequence selection presence field is 0, it indicates that the initial synchronization sequence type field does not exist in the first information element/is not triggered in the first information element.
2) If the initial synchronization sequence selection presence field is 1, it indicates that the initial synchronization sequence type field exists in the first information element/is triggered in the first information element.

It should be understood that the foregoing description is merely an example for description, and is not intended as a final limitation.

A meaning of the MMS ranging sequence selection presence field in the first information element is as follows:
1) If the MMS ranging sequence selection presence field is 0, it indicates that the MMS sequence type field does not exist in the first information element/is not triggered in the first information element.
2) If the MMS ranging sequence selection presence field is 1, it indicates that the MMS sequence type field exists in the first information element/is triggered in the first information element.

It should be understood that the initial synchronization sequence selection presence field is enabled only when the ranging mode field is equal to 0 or 1, and the MMS ranging sequence selection presence field is enabled only when the ranging mode field is equal to 1 or 2.

In addition, meanings of the transmitter MMS code field, the receiver MMS code field, the transmitter gap size for MMS ranging, the receiver gap size for MMS ranging, the transmitter initial synchronization code field, and the transmitter initial synchronization code field in the first information element are as follows:
✧ The transmitter MMS code field indicates an index value, and the index value corresponds to a preamble sequence that is used by a transmitter (the first communication apparatus) to send a UWB MMS fragment signal in an upcoming first measurement process. The preamble sequence indicated by the field may be from a Golay sequence, a CZC sequence, or an Ipatov sequence.
✧ The receiver MMS code field indicates an index value, and the index value corresponds to a preamble sequence that is used by a receiver (the second communication apparatus) to receive a UWB MMS fragment signal in a corresponding upcoming first measurement process. The preamble sequence indicated by the field may be from a Golay sequence, a CZC sequence, or an Ipatov sequence.
✧ The transmitter gap size field for MMS ranging is used together with the transmitter MMS code field, and is an index value. Each index value corresponds to a value representing a gap size (gap size), that is, different index values correspond to different gap size values.
✧ The receiver gap size field for MMS ranging is used together with the receiver MMS code field, and is an index value. Each index value corresponds to a value representing a gap size, that is, different index values correspond to different gap size values.
✧ The transmitter initial synchronization code field indicates an index value, and a preamble sequence indicated by the field may be from an Ipatov sequence.
   The receiver initial synchronization code field indicates an index value, and a preamble sequence indicated by the field may be from an Ipatov sequence.

It should be noted that a form of the first information element is not limited in this application, and any field and field form that can reflect embodiments of this application fall within the protection scope of this application. This is not limited in this application. In other words, newly introduced fields such as Ranging Mode, Initial Sequence Selection Presence, MMS Ranging Sequence Selection, Sequence Usage Type, TX MMS Code, RX MMS Coded, TX Gap Sizes for MMS Ranging, RX Gap Sizes for MMS Ranging, TX initial Sync. Code, and RX initial sync. Code that are of the first information element in this application are merely specific examples. Message size values of these fields and locations of these fields in an information element are not limited in this application. FIG. 6 is merely an example form of the first information element.

In addition, a specific name of the first information element is not limited in this application. For example, the first information element may be referred to as an enhanced ranging channel and preamble code selection information element (enhanced ranging channel and preamble code selection information element, eRCPCS IE). For example, the newly added eRCPCS IE may reuse a reserved list row in a nested IE (nested IE) list defined in Table 7 to Table 18 (Table 7 to Table 18) of the 802.15.4z protocol. Elements in the list row include: a sub-ID value (Sub-ID value) of the IE, an IE name (name), an IE type, an object using the IE (Used by) (for example, an upper layer (upper layer, UL)), an object creating the IE (Created by) (upper layer protocol), and the like. The IE type includes a data (Data) type, an enhanced beacon type, an enhanced acknowledgment message type, a multi-purpose type, and the like.

The newly added eRCPCS IE may be identified and processed by a device that needs to perform a measurement function. For example, an eRCPCS IE is configured at a protocol upper layer of a transmitter device, and is transferred to a MAC layer of a transmitter device. For another example, a MAC layer of the receiver device transfers a received eRCPCS IE to a protocol upper layer of the receiver device, and the protocol upper layer performs recognition processing on the eRCPCS IE.

For ease of understanding, the following describes the newly added eRCPCS IE in detail with reference to Table 3.

Table 3 is an expansion and extension of Table 7 to Table 18 (Table 7 to Table 18) in the existing 802.15.4z protocol. For brevity of the protocol, an existing definition in the Table 7 to Table 18 is not reflected in Table 3. Specifically, it can be seen from Table 3 below that the newly added eRCPCS IE may be added to a nested IE list defined in Table 7 to Table 18 (Table 7 to Table 18) in the existing 802.15.4z protocol, and used as a newly added IE in the 802.15.4ab protocol or a subsequent version protocol. Specifically, a reserved sub-ID value (Sub-ID value) in the nested IE list defined in Table 7 to Table 18 (Table 7 to Table 18) in the existing 802.15.4z protocol may indicate the newly added eRCPCS IE.

**Table 3**

| Sub-ID value | IE Name | Data | Used by | Created by |
|---|---|---|---|---|
| T | eRCPCS IE | X | Upper Layer | Upper Layer |

T in Table 3 may be any one or more values in 0x5d-0x7f. Table 3 may be an expansion and extension of the nested IE list defined in Table 7 to Table 18 (Table 7 to Table 18) in the existing 802.15.4z protocol. In addition, X in Table 3 indicates that the eRCPCS IE is an IE of a data type, that is, the eRCPCS IE is carried by a data frame (data frame).

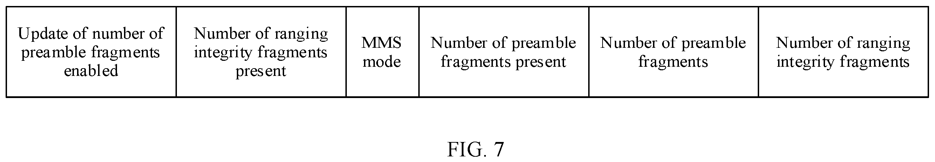

FIG. 7 is a diagram of a structure of a second information element according to an embodiment of this application. As shown in FIG. 7, the second information element includes an update of number of preamble fragments enabled (update of number of preamble fragments enabled) field, a number of ranging integrity fragments present (number of ranging integrity fragments present) field, an MMS mode (MMS mode) field, a number of preamble fragments present field, a number of preamble fragments field, a number of ranging integrity fragments (number of ranging integrity fragments) field, and the like.

Specifically, the update of number of preamble fragments enabled field indicates whether an update of number of fragments in an MMS ranging phase exists in the second information element/is triggered in the second information element. A value 0 indicates that the update is not triggered, and a value 1 indicates that the update is triggered. If the update of number of preamble fragments is triggered, optionally, one or more other IEs and/or one or more frame structures that can complete the update of number of preamble fragments may be correspondingly triggered to complete the update of number of preamble fragments, and the one or more other IEs and/or one or more frame structures that can complete the update of number of preamble fragments are not limited in this application. The number of ranging integrity fragments present field indicates whether the number of ranging integrity fragments field exists in the second information element/is triggered in the second information element. A value 0 indicates that the number of ranging integrity fragments field does not exist, and a value 1 indicates that the number of ranging integrity fragments field exists. The MMS mode field in the second information element indicates an MMS mode. MMS mode=0 indicates interlaced MMS ranging, and MMS mode=1 indicates non-interlaced MMS ranging. For an MMS type, refer to FIG. 5. Details are not described herein again. An indication value of the MMS mode is not limited in this application. For example, MMS mode=1 may indicate interlaced MMS ranging, and MMS mode=0 may indicate non-interlaced MMS ranging.

It should be noted that a form of the second information element is not limited in this embodiment of this application. Any field and field form that can reflect embodiments of this application fall within the protection scope of this application. This is not limited in this application. In other words, newly introduced fields such as Update of Number of Preamble Fragments Enabled, Number of Ranging Integrity Fragments Present, MMS Mode, and Number of Ranging Integrity Fragments that are of the second information element are merely specific examples in this embodiment of this application. Message size values of these fields and locations of these fields in an information element are not limited in this application. FIG. 7 is merely an example form of the second information element.

In addition, a specific name of the second information element is not limited in embodiments of this application. For example, the second information element may be referred to as an enhanced unified control information element (enhanced unified control information element, eUC IE). For example, the newly added eUC IE may reuse a reserved list row in a nested IE list defined in Table 7 to Table 18 (Table 7 to Table 18) of the 802.15.4z protocol. A reuse manner of the newly added eUC IE is similar to the foregoing reuse manner of the eRCPCS IE. Details are not described herein again.

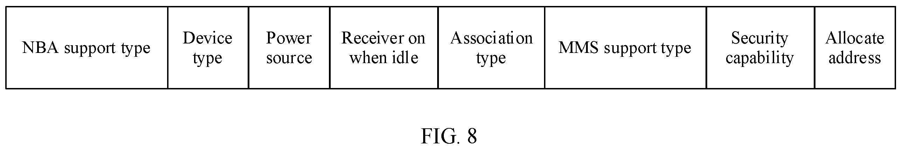

FIG. 8 is a diagram of a structure of indication information according to an embodiment of this application. As shown in FIG. 8, the indication information includes a narrowband signal assisted (NB assisted, NBA) support type (NBA support type) field, a device type (device type) field, a power source (power source) field, a receiver on when idle (receiver on when idle) field, an association type (association type) field, an MMS support type (MMS support type) field, a security capability (security capability) field, and an allocate address (allocate address) field. For descriptions of the power source field, the receiver on when idle field, the association type field, the security capability field, and the allocated address field, refer to an existing protocol. Details are not described herein.

Specifically, the NBA support type field indicates whether the second communication apparatus supports NBA. A first value (for example, 0) of the NBA support type field indicates that the second communication apparatus does not support the NBA, and a second value (for example, 1) indicates that the second communication apparatus supports the NBA.

When the NBA support type field is 0, the second communication apparatus may send the indication information by using a preconfigured UWB signal, or may send the indication information by using a non-UWB signal, for example, a Bluetooth signal.

The MMS support type field indicates whether the second communication apparatus supports MMS. A first value (for example, 0) of the MMS support type field indicates that the second communication apparatus does not support the MMS, and a second value (for example, 1) indicates that the second communication apparatus supports the MMS.

Correspondingly, feedback information sent by the first communication apparatus to the second communication apparatus may be in a form shown in Table 4.

**Table 4 Format of feedback information**

| | |
|---|---|
| Short address (Short address) | Association status (Association status) |

Meanings of values of an association status field in Table 4 are explained in Table 5.

**Table 5**

| Association status | Description |
|---|---|
| 0x00 | Association successful (association successful) |
| 0x01 | Personal area network (personal area network, PAN) at capacity (PAN at capacity) |
| 0x02 | Personal area network access denied (PAN access denied) |
| 0x03 | Frequency hopping sequence offset duplication (Hopping sequence offset duplication) |
| 0x04 | Access denied (access denied due to not supporting NB) |
| 0x05 | Access denied (access denied due to not supporting MMS) |
| 0x06-0x7f | Reserved |
| 0x80 | Fast association successful (fast association successful) |
| 0X81-0xff | Reserved |

As shown in Table 5, for example, when the association status is 0x00, it indicates association successful; when the association status is 0x01, it indicates PAN at capacity; when the association status is 0x02, it indicates PAN access denied; when the association status is 0x03, it indicates hopping sequence offset duplication; when the association status is 0x04, it indicates access denied (due to not supporting an NB capability); when the association status is 0x05, it indicates access denied (due to not supporting an MMS capability); 0x06-0x7f in the association status are reserved values; when the association status is 0x80, it indicates fast association successful; and 0x81-0xff in the association status are reserved values. In this application, association status values for indicating corresponding access denied (due to not supporting the NB capability) and corresponding access denied (due to not supporting the MMS capability) are not limited, and are merely examples herein.

It should be noted that a form of the indication information shown in FIG. 8 is not limited in this application, and any field and field form that can reflect embodiments of this application fall within the protection scope of this application. In other words, newly introduced fields such as the NBA support type and the MMS support type shown in FIG. 8 are merely specific examples in this application. Message size values of these fields and locations of these fields in a message carrying these fields are not limited in this application, FIG. 8 is merely an example form.

In this embodiment of this application, it is assumed that a controller initiator is a third-party device (neither an initiator nor a responder). In a ranging control phase, a controller broadcasts a control message including a scheduling IE to a participating device that participates in a UWB application process. The controller may alternatively be an initiator (initiator) device, or may be a responder (responder) device. Unless otherwise specified, in this embodiment of this application, an example in which the third-party device is used as the controller is used by default for description. The method provided in this application is applicable to a case in which the responder is a controller or the controller is an initiator device. Details are not described again.

A signal carrier that carries the designed first information element and second information element is not limited in embodiments of this application. Specifically, the signal carrier may be a UWB signal, or may be a non-UWB signal. The non-UWB signal may be an NB signal, or may be a Bluetooth signal.

A type of a frame for carrying the designed first information element/the second information element is not limited in this application. For example, the frame type may be a data frame, or may be a MAC command frame (MAC command frame).

Similarly, a signal carrier that carries the indication information shown in FIG. 8 is not limited in this application. Specifically, the signal carrier may be a UWB signal, or may be a non-UWB signal. The non-UWB signal may be an NB signal, or may be a Bluetooth signal.

Similarly, a type of a frame for carrying the indication information shown in FIG. 8 is not limited in this embodiment of this application. For example, the type of the frame may be a data frame, or may be a MAC command frame.

A combination of fields in the first information element/the second information element/the indication information shown in FIG. 8 is not limited in this application. The eRCPCS IE, the eUC IE, and the indication information shown in FIG. 8 are merely examples. In other words, newly added fields in the first information element/the second information element/the indication information shown in FIG. 8 may be split into different frame structures. The frame structure is not limited in this application. For example, the frame structure may be an IE, or may be of another type. For example, when the frame structure is an IE, the newly introduced fields in the first information element/the second information element/the indication information shown in FIG. 8 may be split into different IEs. For example, these newly introduced fields in the first information element/the second information element/the indication information shown in FIG. 8 may be split into another IE, or may be represented by reusing an IE in the existing 802.15.4z protocol. The another IE and the IE in the existing 802.15.4z protocol may be one or more IEs. In other words, one or more of the newly introduced fields in the first information element/the second information element/the indication information shown in FIG. 8 may form another IE together with one or more fields that are not included in the first information element/the second information element/the indication information shown in FIG. 8, or may be represented by reusing the IE in the existing 802.15.4z protocol. The another IE is not limited in this application. In addition, one or more fields included in the another IE are not limited in this application. The IE in the existing 802.15.4z protocol is not limited in this application. In addition, one or more fields included in the IE in the existing 802.15.4z protocol are not limited in this application. In addition, the another IE/IE in the existing 802.15.4z protocol may alternatively be split in different frames. Frame types of different frames may also be different. This is not limited in this application. For example, the frame type may be a data frame, or may be a MAC command frame. The foregoing description of the combination manner in which the frame structure is the IE is also applicable to a combination manner in which the frame structure is of another type. Details are not described herein again. In other words, any frame structure that can reflect a purpose of one or more fields in the first information element/the second information element/the indication information shown FIG. 8 falls within the protection scope of this application regardless of a combination manner.

It should be noted that the ultra-wideband communication method provided in this application may be applied to one or more of UWB ranging, sensing, positioning, and communication applications. This is not specifically limited in this application. For example, the ranging control phase shown in FIG. 3 and FIG. 5 in this application may be understood as one of measurement control phases, the ranging phase may be understood as one of measurement phases, and a ranging report phase may be understood as one of measurement report phases. For another example, the ultra-wideband communication method provided in this application is applied to a UWB sensing procedure. The measurement control phase may be understood as a sensing control phase, a measurement phase may be understood as a sensing phase, and a measurement report phase may be understood as a sensing result report phase.

In addition, it should be further noted that names of different phases of the foregoing single measurement round are merely examples, and do not constitute any limitation on the protection scope of this application. For example, the measurement control phase may be understood as a phase for configuring a parameter required in a measurement round; for another example, the measurement phase may be understood as a phase for measurement; and for still another example, the measurement result report phase may be understood as a phase for reporting a measurement result, and may also be referred to as an end of the measurement phase.

It should be noted that the first information element/the second information element/the indication information shown in FIG. 8 provided in this application may be used in any phase of a measurement round, or may be used in a device discovery and connection establishment phase before measurement starts, or the like. In other words, a use phase of the first information element/the second information element/the indication information is not limited in this application.

Optionally, the first information element/the second information element/the indication information shown in FIG. 8 provided in this application may be carried in a newly added message, or may be carried in an existing message, for example, carried in a message (for example, an RCM message) in the 802.15.4z protocol, or evolved from a message in the 802.15.4z protocol, or may be improved and/or reused based on an existing message. This is not specifically limited in this application.

It should be noted that the first information element/the second information element/the indication information shown in FIG. 8 provided in this application may be used for a one-to-one measurement case, namely, a case in which there is one measurement initiator and one measurement responder, or may be extended to a one-to-many or many-to-many case, namely, a case in which there is one measurement initiator and a plurality of measurement responders, or there are a plurality of measurement initiators and a plurality of measurement responders. Details are not described herein. A measurement case to which the first information element/the second information element/the indication information shown in FIG. 8 is applied is not limited in this application.

The foregoing describes the method embodiments in embodiments of this application, and the following describes corresponding apparatus embodiments.

To implement functions in the methods provided in embodiments of this application, a terminal and a network device may each include a hardware structure and/or a software module, to implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

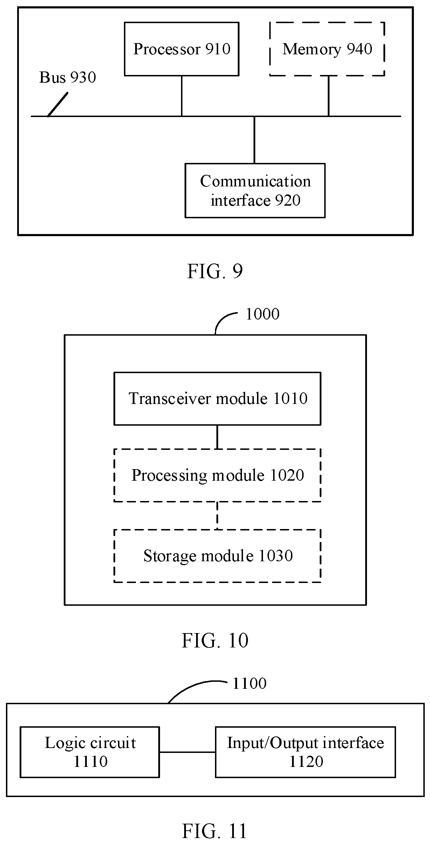

FIG. 9 is a block diagram of a structure of a communication apparatus 900 according to an embodiment of this application. The communication apparatus 900 includes a processor 910 and a communication interface 920. The processor 910 and the communication interface 920 may be connected to each other through a bus 930. The communication apparatus 900 shown in FIG. 9 may be a first communication apparatus, or may be a second communication apparatus.

Optionally, the communication apparatus 900 further includes a memory 940.

The memory 940 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 940 is configured to store related instructions and data.

The processor 910 may be one or more central processing units (central processing unit, CPU). When the processor 910 is one CPU, the CPU may be a single-core CPU, or may be a multi-core CPU.

When the communication apparatus 900 is a first communication apparatus, the processor 910 in the communication apparatus 900 is configured to read a computer program or instructions stored in the memory 940, to perform, for example, the following operations: determining a first information element, where the first information element includes at least one of first information and second information, the first information is used to configure a first sequence, the first sequence is used for initial synchronization of the second communication apparatus, the second information is used to configure a second sequence, and the second sequence is used in a first measurement process between the first communication apparatus and the second communication apparatus; and sending the first information element to the second communication apparatus.

For another example, the following operation may be performed: sending a second information element to the second communication apparatus.

For another example, the following operation may be performed: sending a third information element to the second communication apparatus.

The foregoing content is merely used as an example for description. When the communication apparatus 900 is the first communication apparatus, the communication apparatus 900 is responsible for performing the methods or steps related to the first communication apparatus in the foregoing method embodiments.

When the communication apparatus 900 is a second communication apparatus, the processor 910 in the communication apparatus 900 is configured to read a computer program or instructions stored in the memory 940, to perform, for example, the following operations: receiving a first information element from a first communication apparatus, where the first information element includes at least one of first information and second information, the first information is used to configure a first sequence, the first sequence is used for initial synchronization of the second communication apparatus, the second information is used to configure a second sequence, and the second sequence is used in a first measurement process between the first communication apparatus and the second communication apparatus; and determining the first sequence and/or the second sequence based on the first information element.

For another example, the following operation may be performed: receiving a second information element from the first communication apparatus.

For another example, the following operation may be performed: receiving a third information element sent by the first communication apparatus.

The foregoing content is merely used as an example for description. When the communication apparatus 900 is the second communication apparatus, the communication apparatus 900 is responsible for performing the methods or steps related to the second communication apparatus in the foregoing method embodiments.

The foregoing descriptions are merely examples. For specific content, refer to content shown in the method embodiments. In addition, for implementation of each operation in FIG. 9, further refer to a corresponding description of the method embodiment shown in FIG. 4.

FIG. 10 is a block diagram of a structure of a communication apparatus 1000 according to an embodiment of this application. The communication apparatus 1000 may be a network device or a terminal device (a first communication apparatus may be a network device or a terminal device) in the foregoing embodiments, or may be a chip or a module in the network device or the terminal device, and is configured to implement the methods in the foregoing embodiments. The communication apparatus 1000 includes a transceiver module 1010 and a processing module 1020. The following describes the transceiver module 1010 and the processing module 1020 by using an example.

The transceiver module 1010 may include a sending module and a receiving module that are respectively configured to implement a sending function or a receiving function in the foregoing method embodiments. The transceiver module 1010 may further include a processing module, configured to implement a function other than sending or receiving.

When the communication apparatus 1000 is a first communication apparatus, for example, the processing module 1020 is configured to determine a first information element, where the first information element includes at least one of first information and second information, the first information is used to configure a first sequence, the first sequence is used for initial synchronization of the second communication apparatus, the second information is used to configure a second sequence, and the second sequence is used in a first measurement process between the first communication apparatus and the second communication apparatus. The transceiver module 1010 is configured to send the first information element to the second communication apparatus.

Optionally, the communication apparatus 1000 further includes a storage module 1030. The storage module 1030 is configured to store a program or code used to perform the foregoing methods.

The foregoing content is merely used as an example for description. When the communication apparatus 1000 is the first communication apparatus, the communication apparatus 1000 is responsible for performing the methods or steps related to the first communication apparatus in the foregoing method embodiments.

When the communication apparatus 1000 is a first communication apparatus, for example, the transceiver module 1010 is configured to receive a first information element, where the first information element includes at least one of first information and second information, the first information is used to configure a first sequence, the first sequence is used for initial synchronization of the second communication apparatus, the second information is used to configure a second sequence, and the second sequence is used in a first measurement process between the first communication apparatus and the second communication apparatus. The processing module 1020 is configured to determine the first sequence and/or the second sequence based on the first information element.

Optionally, the communication apparatus 1000 further includes a storage module 1030. The storage module 1030 is configured to store a program or code used to perform the foregoing methods.

The foregoing content is merely used as an example for description. When the communication apparatus 1000 is the second communication apparatus, the communication apparatus 1000 is responsible for performing the methods or steps related to the second communication apparatus in the foregoing method embodiments.

In addition, for implementation of each operation in FIG. 10, further refer to corresponding descriptions of the method shown in the foregoing embodiments. Details are not described herein again.

The apparatus embodiments shown in FIG. 9 and FIG. 10 are used to implement the content described in FIG. 4 in the foregoing method embodiments. Therefore, for specific execution steps and methods of the apparatuses shown in FIG. 9 and FIG. 10, refer to the content described in the foregoing method embodiments.

It should be understood that the foregoing transceiver module may include the sending module and the receiving module. The sending module is configured to perform a sending action of the communication apparatus, and the receiving module is configured to perform a receiving action of the communication apparatus. For ease of description, the sending module and the receiving module are combined into one transceiver module in this embodiment of this application. Unified descriptions are provided herein, and details are not described below again.

FIG. 11 is a diagram of a communication apparatus 1100 according to an embodiment of this application. The communication apparatus 1100 may be configured to implement a function of a network device or a terminal device (when a first communication apparatus is a network device or a terminal device) in the foregoing methods. The communication apparatus 1100 may be a chip in the network device or the terminal device.

The communication apparatus 1100 includes an input/output interface 1120 and a logic circuit 1111. The input/output interface 1120 may be an input/output circuit. The logic circuit 1111 may be a signal processor, a chip, or another integrated circuit that can implement the method in this application. The input/output interface 1120 is configured to input or output a signal or data.

For example, when the communication apparatus 1100 is the first communication apparatus, the logic circuit 1111 is configured to determine a first information element, where the first information element includes at least one of first information and second information, the first information is used to configure a first sequence, the first sequence is used for initial synchronization of the second communication apparatus, the second information is used to configure a second sequence, and the second sequence is used in a first measurement process between the first communication apparatus and the second communication apparatus. The input/output interface 1120 is configured to send the first information element to the second communication apparatus. The logic circuit 1111 is configured to perform a part or all of the steps in any one of the methods provided in this application.

For example, when the communication apparatus 1100 is a second communication apparatus, the input/output interface 1120 is configured to receive a first information element from the first communication apparatus, where the first information element includes at least one of first information and second information, the first information is used to configure a first sequence, the first sequence is used for initial synchronization of the second communication apparatus, the second information is used to configure a second sequence, and the second sequence is used in a first measurement process between the first communication apparatus and the second communication apparatus. The logic circuit 1111 is configured to perform a part or all of the steps in any one of the methods provided in this application. For example, the logic circuit 1111 is configured to determine the first sequence and/or the second sequence based on the first information element.

In a possible implementation, the logic circuit 1111 executes instructions stored in a memory, to implement a function implemented by the network device or the terminal device.

Optionally, the communication apparatus 1100 further includes a memory. Optionally, the processor and the memory are integrated together.

Optionally, the memory is outside the communication apparatus 1100.

In a possible implementation, the logic circuit 1111 inputs/outputs a message or signaling through the input/output interface 1120. The logic circuit may be a signal processor, a chip, or another integrated circuit that can implement the methods in embodiments of this application.

The foregoing description of the apparatus in FIG. 11 is merely an example for description. The apparatus can be configured to perform the methods in the foregoing embodiments. For specific content, refer to the descriptions in the foregoing method embodiment. Details are not described herein again.

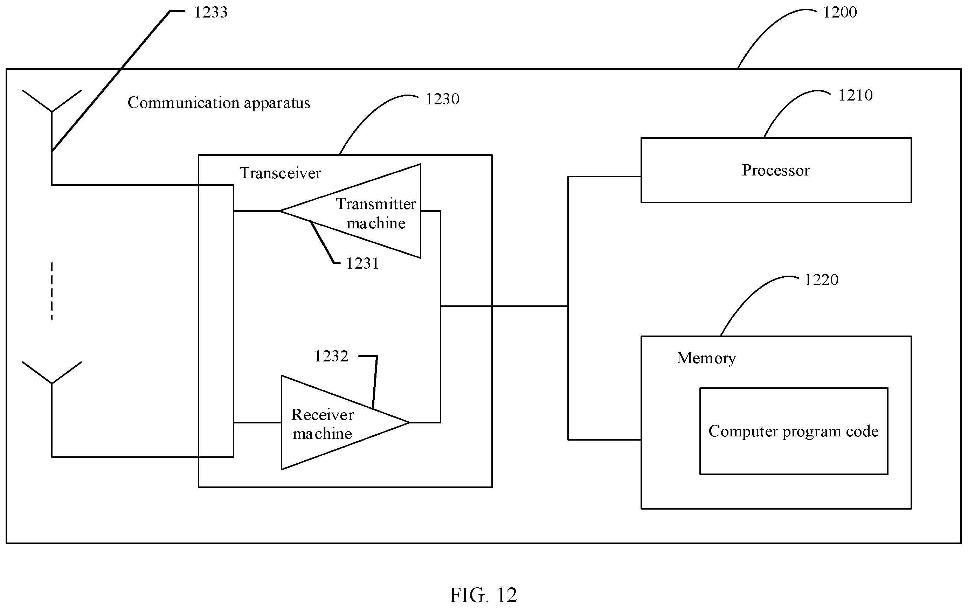

FIG. 12 is a block diagram of a communication apparatus 1200 according to an embodiment of this application. The communication apparatus 1200 may be a network device (when a first communication apparatus is a network device), or may be a chip. The communication apparatus 1200 may be configured to perform an operation performed by a network device in the method embodiments shown in FIG. 3 to FIG. 7.

When the communication apparatus 1200 is a network device, for example, a base station, FIG. 12 is a simplified diagram of a structure of the base station. The base station includes a part 1210, a part 1220, and a part 120. The part 1210 is mainly configured to: perform baseband processing, control the base station, and the like. The part 1210 is usually a control center of the base station, may be usually referred to as a processor, and is configured to control the base station to perform a processing operation on a network device side in the foregoing method embodiments. The part 1220 is mainly configured to store computer program code and data. The part 1230 is mainly configured to: receive and send a radio frequency signal, and perform conversion between the radio frequency signal and a baseband signal. The part 1230 may be usually referred to as a transceiver module, a transceiver machine, a transceiver circuit, a transceiver, or the like. The transceiver module in the part 1230 may also be referred to as a transceiver machine, a transceiver, or the like, and includes an antenna 1233 and a radio frequency circuit (not shown in the figure). The radio frequency circuit is mainly configured to perform radio frequency processing.

Optionally, a component configured to implement a receiving function in the part 1230 may be considered as a receiver machine, and a component configured to implement a sending function may be considered as a transmitter machine. In other words, the part 1230 includes a receiver machine 1232 and a transmitter machine 1231. The receiver machine may also be referred to as a receiving module, a receiver, a receiver circuit, or the like, and the transmitter machine may be referred to as a transmitting module, a transmitter, a transmitter circuit, or the like.

The part 1210 and the part 1220 may include one or more boards, and each board may include one or more processors and one or more memories. The processor is configured to: read and execute a program in the memory, to implement a baseband processing function and control the base station. If there are a plurality of boards, the boards may be interconnected with each other to enhance a processing capability. In an optional implementation, a plurality of boards may share one or more processors, or a plurality of boards share one or more memories, or a plurality of boards share one or more processors at the same time.

For example, in an implementation, the transceiver module in the part 1230 is configured to perform a receiving and sending-related process performed by the network device in the embodiment FIG. 4. A processor in part 1210 is configured to perform a processing-related step performed by the network device in the embodiment shown in FIG. 4.

In another implementation, the processor in the part 1210 is configured to perform a processing-related process performed by a communication device in the embodiment shown in FIG. 4.

In another implementation, the transceiver module in the part 1230 is configured to perform a receiving and sending-related process performed by a communication device in the embodiment shown in FIG. 4.

It should be understood that FIG. 12 is merely an example rather than a limitation. The network device including the processor, the memory, and the transceiver may not depend on structures shown in FIG. 9 to FIG. 11.

When the communication apparatus 1200 is a chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiments may be understood as output of the chip, and a receiving operation performed by the network device in the foregoing method embodiments may be understood as input of the chip.

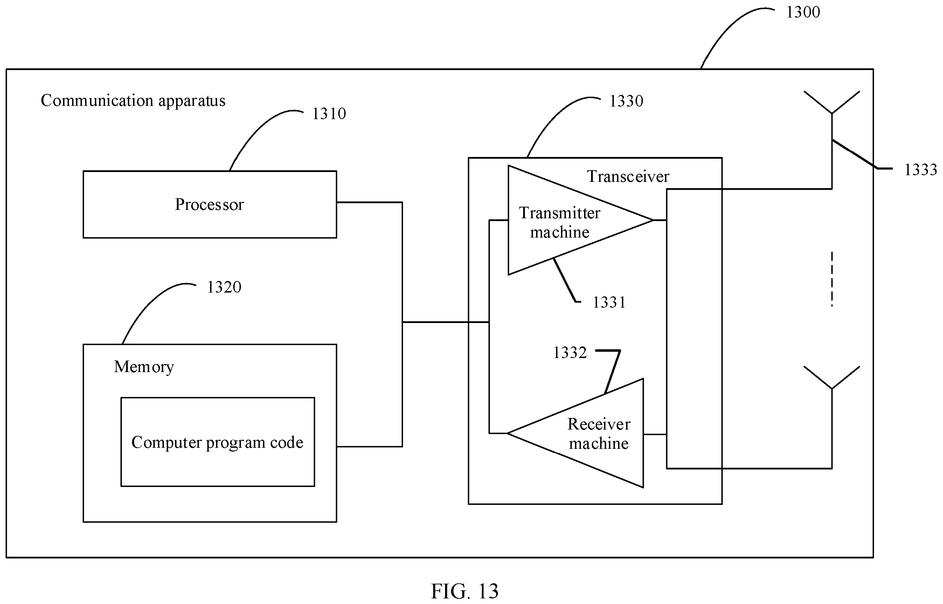

FIG. 13 is a block diagram of a communication apparatus 1300 according to an embodiment of this application. The communication apparatus 1300 may be a terminal device (when a first communication apparatus is a terminal device), a processor of the terminal device, or a chip. The communication apparatus 1300 may be configured to perform an operation performed by the terminal device or the communication device in the foregoing method embodiments.

When the communication apparatus 1300 is the terminal device, FIG. 13 is a simplified diagram of a structure of the terminal device. As shown in FIG. 13, the terminal device includes a processor, a memory, and a transceiver. The memory may store computer program code. The transceiver includes a transmitter machine 1331, a receiver machine 1332, a radio frequency circuit (not shown in the figure), an antenna 1333, and an input/output apparatus (not shown in the figure).

The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of electromagnetic wave. The input/output apparatus, for example, a touchscreen, a display screen, or a keyboard, is mainly configured to: receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 13 shows only one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have sending and receiving functions may be considered as a transceiver module of the terminal device, and the processor that has a processing function may be considered as a processing module of the terminal device.

As shown in FIG. 13, the terminal device includes a processor 1310, a memory 1320, and a transceiver 1330. The processor 1310 may also be referred to as a processing unit, a processing board, a processing module, a processing apparatus, or the like. The transceiver 1330 may also be referred to as a transceiver unit, a transceiver apparatus, or the like.

Optionally, a component configured to implement a receiving function in the transceiver 1330 may be considered as a receiving module, and a component configured to implement a sending function in the transceiver 1330 may be considered as a sending module. That is, the transceiver 1330 includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitting module, a transmitter circuit, or the like.

For example, in an implementation, the processor 1310 is configured to perform a processing action on the terminal device side in the embodiment shown in FIG. 4, and the transceiver 1330 is configured to perform transmitting and receiving actions on the terminal device side in FIG. 3 to FIG. 7.

For example, in an implementation, the processor 1310 is configured to perform a processing action on the terminal device side in the embodiment shown in FIG. 4, and the transceiver 1330 is configured to perform transmitting and receiving actions on the terminal device side in FIG. 4.

It should be understood that FIG. 13 is merely an example rather than a limitation. The terminal device including the transceiver module and the processing module may not depend on structures shown in FIG. 9 to FIG. 11.

When the communication apparatus 1300 is a chip, the chip includes a processor, a memory, and a transceiver. The transceiver may be an input/output circuit or a communication interface. The processor may be a processing module, a microprocessor, or an integrated circuit integrated on the chip. A sending operation performed by the terminal device in the foregoing method embodiments may be understood as output of the chip, and a receiving operation performed by the terminal device in the foregoing method embodiments may be understood as input of the chip.

This application further provides a chip, including a processor. The processor is configured to: invoke, from a memory, instructions stored in the memory and run the instructions, to enable a communication device on which the chip is installed to perform the methods in the foregoing examples.

This application further provides another chip, including an input interface, an output interface, and a processor. The input interface, the output interface, and the processor are connected through an internal connection path. The processor is configured to execute code in a memory. When the code is executed, the processor is configured to perform the methods in the foregoing examples. Optionally, the chip further includes a memory. The memory is configured to store a computer program or code.

This application further provides a processor, configured to be coupled to a memory, and configured to perform a method and a function that are related to the network device or the terminal device in any one of the foregoing embodiments.

Another embodiment of this application provides a computer program product including instructions. When the computer program product runs on a computer, the method in the foregoing embodiments is implemented.

This application further provides a computer program. When the computer program is run on a computer, the method in the foregoing embodiments is implemented.

Another embodiment of this application provides a computer-readable storage medium. The computer-readable storage medium stores a computer program. When the computer program is executed by a computer, the method in the foregoing embodiments is implemented.

In the descriptions of embodiments of this application, unless otherwise specified, "a plurality of" means two or more. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a number or an execution sequence, and the terms such as "first" and "second" do not indicate a definite difference either. In addition, in embodiments of this application, words such as "example" or "for example" are used to represent an example or a description.

Any embodiment or design solution described by "example" or "for example" in embodiments of this application should not be construed as being more preferred or having more advantages than another embodiment or design solution. Exactly, use of the terms such as "example" or "for example" is intended to present a related concept in a specific manner for ease of understanding.

Unless otherwise specified, "/" in the descriptions of embodiments of this application represents an "or" relationship between associated objects. For example, A/B may represent A or B. In this application, "and/or" describes only an association relationship between associated objects and represents that three relationships may exist. For example, A and/or B may represent the following three cases: Only A exists, both A and B exist, and only B exists, where A and B may be singular or plural.

It should be understood that "one embodiment" or "an embodiment" mentioned throughout this specification means that particular features, structures, or characteristics related to the embodiment are included in at least one embodiment of this application.

Therefore, "in one embodiment" or "in an embodiment" appearing throughout the specification does not necessarily refer to a same embodiment. In addition, these particular features, structures, or characteristics may be combined in one or more embodiments by using any appropriate manner.

Sequence numbers of the foregoing processes do not mean execution sequences in various embodiments of this application. The execution sequences of the processes should be determined based on functions and internal logic of the processes, and should not constitute any limitation on implementation processes of embodiments of this application.

It may be understood that an "embodiment" mentioned throughout this specification means that particular features, structures, or characteristics related to the embodiment are included in at least one embodiment of this application.

Therefore, embodiments in the entire specification are not necessarily a same embodiment. In addition, these particular features, structures, or characteristics may be combined in one or more embodiments by using any appropriate manner.

It may be understood that sequence numbers of the processes do not mean execution sequences in various embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed.

In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When functions are implemented in the form of a software functional unit and sold or used as an independent product, the functions may be stored in a computer-readable storage medium. Based on such an understanding, the technical solutions in embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a ROM, a RAM, a magnetic disk, or an optical disc.

The foregoing descriptions are merely specific implementations in embodiments of this application, but are not intended to limit the protection scope in embodiments of this application. Any variation or replacement readily figured out by a person skilled in the art within the technical scope disclosed in embodiments of this application shall fall within the protection scope in embodiments of this application. Therefore, the protection scope of embodiments of this application should be subject to the protection scope of the claims.

## Claims

1. A communication method, comprising:
determining, by a first communication apparatus, a first information element, wherein the first information element comprises at least one of first information and second information, the first information is used to configure a first sequence, the first sequence is used for initial synchronization of a second communication apparatus, the second information is used to configure a second sequence, and the second sequence is used in a first measurement process between the first communication apparatus and the second communication apparatus; and
sending, by the first communication apparatus, the first information element to the second communication apparatus.

2. The method according to claim 1, wherein the first information element further comprises at least one of third information and fourth information, the third information indicates a type of the first sequence, and the fourth information indicates a type of the second sequence.

3. The method according to claim 1 or 2, wherein the first information element further comprises fifth information, and the fifth information indicates a type of the first measurement process.

4. The method according to claim 3, wherein the type of the first measurement process comprises at least one of the following:
a non-multi-millisecond transmission based ranging process, a multi-millisecond transmission based ranging process, or a narrowband signal-assisted multi-millisecond transmission based ranging process.

5. The method according to any one of claims 1 to 4, wherein the first measurement process comprises the multi-millisecond transmission based ranging process or the narrowband signal- assisted multi-millisecond transmission based ranging process; and
the method further comprises:
sending, by the first communication apparatus, a second information element to the second communication apparatus, wherein the second information element comprises sixth information, and the sixth information indicates a number of ranging integrity fragments.

6. The method according to claim 5, wherein the second information element further comprises seventh information, and the seventh information indicates whether a number of preamble fragments is to be updated.

7. The method according to claim 5 or 6, wherein the second information element further comprises eighth information; and
the eighth information indicates that a type of the multi-millisecond transmission is interlaced multi-millisecond transmission; or
the eighth information indicates that a type of the multi-millisecond transmission is non-interlaced multi-millisecond transmission.

8. The method according to any one of claims 5 to 7, wherein the method further comprises:
sending, by the first communication apparatus, a third information element to the second communication apparatus, wherein the third information element is used in a second measurement process between the second communication apparatus and the first communication apparatus.

9. The method according to claim 8, wherein when the second communication apparatus supports the third information element and does not support the second information element, the second measurement process is based on the third information element; or
when the second communication apparatus supports the third information element and the second information element, the second measurement process is based on the second information element and the third information element.

10. The method according to any one of claims 1 to 9, wherein before the sending, by the first communication apparatus, the first information element to the second communication apparatus, the method further comprises:
receiving, by the first communication apparatus, indication information from the second communication apparatus, wherein the indication information indicates whether the second communication apparatus supports at least one of a narrowband signal capability and a multi-millisecond transmission capability.

11. The method according to claim 10, wherein when the indication information indicates that the second communication apparatus does not support at least one of the narrowband signal capability and the multi-millisecond transmission capability, the method further comprises:
sending, by the first communication apparatus, feedback information to the second communication apparatus, wherein the feedback information indicates that the second communication apparatus is not allowed to access a network.

12. A communication method, comprising:
receiving, by a second communication apparatus, a first information element from a first communication apparatus, wherein the first information element comprises at least one of first information and second information, the first information is used to configure a first sequence, the first sequence is used for initial synchronization of the second communication apparatus, the second information is used to configure a second sequence, and the second sequence is used in a first measurement process between the first communication apparatus and the second communication apparatus; and
determining, by the second communication apparatus, at least one of the first sequence and the second sequence based on the first information element.

13. The method according to claim 12, wherein the first information element further comprises at least one of third information and fourth information, the third information indicates a type of the first sequence, and the fourth information indicates a type of the second sequence.

14. The method according to claim 12 or 13, wherein the first information element further comprises fifth information, and the fifth information indicates a type of the first measurement process.

15. The method according to claim 14, wherein the first measurement process comprises at least one of the following:
a non-multi-millisecond transmission based ranging process, a multi-millisecond transmission based ranging process, or a narrowband signal-assisted multi-millisecond transmission based ranging process.

16. The method according to any one of claims 12 to 15, wherein the first measurement process comprises the multi-millisecond transmission based ranging process or the narrowband signal-supported multi-millisecond transmission based ranging process; and
the method further comprises:
receiving, by the second communication apparatus, a second information element from the first communication apparatus, wherein the second information element comprises sixth information, and the sixth information indicates a number of ranging integrity fragments.

17. The method according to claim 16, wherein the second information element further comprises seventh information, and the seventh information indicates whether a number of preamble fragments is to be updated.

18. The method according to claim 16 or 17, wherein the second information element further comprises eighth information; and
the eighth information indicates that a type of the multi-millisecond transmission is interlaced multi-millisecond transmission; or
the eighth information indicates that a type of the multi-millisecond transmission is non-interlaced multi-millisecond transmission.

19. The method according to any one of claims 16 to 18, wherein the method further comprises:
receiving, by the second communication apparatus, a third information element from the first communication apparatus, wherein the third information element is used in a second measurement process between the second communication apparatus and the first communication apparatus.

20. The method according to claim 19, wherein
when the second communication apparatus supports the third information element and does not support the second information element, the second measurement process is based on the third information element; or
when the second communication apparatus supports the third information element and the second information element, the second measurement process is based on the second information element and the third information element.

21. The method according to any one of claims 12 to 20, wherein before the receiving, by a second communication apparatus, a first information element from a first communication apparatus, the method further comprises:
sending, by the second communication apparatus, indication information to the first communication apparatus, wherein the indication information indicates whether the second communication apparatus supports at least one of a narrowband signal capability and a multi-millisecond transmission capability.

22. The method according to claim 21, wherein when the indication information indicates that the second communication apparatus does not support at least one of the narrowband signal capability and the multi-millisecond transmission capability, the method further comprises:
receiving, by the second communication apparatus, feedback information from the first communication apparatus, wherein the feedback information indicates that the second communication apparatus is not allowed to access a network.

23. A communication apparatus, comprising:
a processing unit, configured to determine a first information element, wherein the first information element comprises at least one of first information and second information, the first information is used to configure a first sequence, the first sequence is used for initial synchronization of a second communication apparatus, the second information is used to configure a second sequence, and the second sequence is used in a first measurement process between the communication apparatus and the second communication apparatus; and
a transceiver unit, configured to send the first information element to the second communication apparatus.

24. The apparatus according to claim 23, wherein the first information element further comprises at least one of third information and fourth information, the third information indicates a type of the first sequence, and the fourth information indicates a type of the second sequence.

25. The apparatus according to claim 23 or 24, wherein the first information element further comprises fifth information, and the fifth information indicates a type of the first measurement process.

26. The apparatus according to claim 25, wherein the type of the first measurement process comprises at least one of the following:
a non-multi-millisecond transmission based ranging process, a multi-millisecond transmission based ranging process, or a narrowband signal-assisted multi-millisecond transmission based ranging process.

27. The apparatus according to any one of claims 23 to 26, wherein the first measurement process comprises the multi-millisecond transmission based ranging process or the narrowband signal-supported multi-millisecond transmission based ranging process; and
the transceiver unit is further configured to send a second information element to the second communication apparatus, wherein the second information element comprises sixth information, and the sixth information indicates a number of ranging integrity fragments.

28. The apparatus according to claim 27, wherein the second information element further comprises seventh information, and the seventh information indicates whether a number of preamble fragments is to be updated.

29. The apparatus according to claim 27 or 28, wherein the second information element further comprises eighth information; and
the eighth information indicates that a type of the multi-millisecond transmission is interlaced multi-millisecond transmission; or
the eighth information indicates that a type of the multi-millisecond transmission is non-interlaced multi-millisecond transmission.

30. The apparatus according to any one of claims 26 to 29, wherein the transceiver unit is further configured to send a third information element to the second communication apparatus, wherein the third information element is used in a second measurement process between the second communication apparatus and the communication apparatus.

31. The apparatus according to claim 30, wherein when the second communication apparatus supports the third information element and does not support the second information element, the second measurement process is based on the third information element; or
when the second communication apparatus supports the third information element and the second information element, the second measurement process is based on the second information element and the third information element.

32. The apparatus according to any one of claims 23 to 31, wherein the transceiver unit is further configured to receive indication information from the second communication apparatus, wherein the indication information indicates whether the second communication apparatus supports at least one of a narrowband signal capability and a multi-millisecond transmission capability.

33. The apparatus according to claim 32, wherein when the indication information indicates that the second communication apparatus does not support at least one of the narrowband signal capability and the multi-millisecond transmission capability, the transceiver unit is further configured to send feedback information to the second communication apparatus, wherein the feedback information indicates that the second communication apparatus is not allowed to access a network.

34. A communication apparatus, comprising:
a transceiver unit, configured to receive a first information element from a first communication apparatus, wherein the first information element comprises at least one of first information and second information, the first information is used to configure a first sequence, the first sequence is used for initial synchronization of the communication apparatus, the second information is used to configure a second sequence, and the second sequence is used in a first measurement process between the first communication apparatus and the communication apparatus; and
a processing unit, configured to determine at least one of the first sequence and the second sequence based on the first information element.

35. The apparatus according to claim 34, wherein the first information element further comprises at least one of third information and fourth information, the third information indicates a type of the first sequence, and the fourth information indicates a type of the second sequence.

36. The apparatus according to claim 34 or 35, wherein the first information element further comprises fifth information, and the fifth information indicates a type of the first measurement process.

37. The apparatus according to claim 36, wherein the first measurement process comprises at least one of the following:
a non-multi-millisecond transmission based ranging process, a multi-millisecond transmission based ranging process, or a narrowband signal-assisted multi-millisecond transmission based ranging process.

38. The apparatus according to any one of claims 34 to 37, wherein the first measurement process comprises the multi-millisecond transmission based ranging process or the narrowband signal-supported multi-millisecond transmission based ranging process; and
the transceiver unit is further configured to receive a second information element from the first communication apparatus, wherein the second information element comprises sixth information, and the sixth information indicates a number of ranging integrity fragments.

39. The apparatus according to claim 38, wherein the second information element further comprises seventh information, and the seventh information indicates whether a number of preamble fragments is to be updated.

40. The apparatus according to claim 38 or 39, wherein the second information element further comprises eighth information; and
the eighth information indicates that a type of the multi-millisecond transmission is interlaced multi-millisecond transmission; or
the eighth information indicates that a type of the multi-millisecond transmission is non-interlaced multi-millisecond transmission.

41. The apparatus according to any one of claims 38 to 40, wherein the transceiver unit is further configured to receive a third information element from the first communication apparatus, wherein the third information element is used in a second measurement process between the communication apparatus and the first communication apparatus.

42. The apparatus according to claim 41, wherein when the communication apparatus supports the third information element and does not support the second information element, the second measurement process is based on the third information element; or
when the communication apparatus supports the third information element and the second information element, the second measurement process is based on the second information element and the third information element.

43. The apparatus according to any one of claims 34 to 42, wherein the transceiver unit is further configured to send indication information to the first communication apparatus, wherein the indication information indicates whether the communication apparatus supports at least one of a narrowband signal capability and a multi-millisecond transmission capability.

44. The apparatus according to claim 43, wherein the transceiver unit is further configured to receive feedback information from the first communication apparatus, wherein the feedback information indicates that the communication apparatus is not allowed to access a network.

45. A communication apparatus, comprising a processor, wherein the processor is coupled to a memory, and the processor is configured to execute a computer program or instructions, to enable the communication apparatus to perform the method according to any one of claims 1 to 22.

46. A chip, comprising a logic circuit and an input/output interface, wherein the logic circuit is configured to execute a computer program or instructions, to enable the chip to perform the method according to any one of claims 1 to 22.

47. A computer-readable storage medium, comprising a computer program or instructions, wherein when the computer program or the instructions are run on a computer, the computer is enabled to perform the method according to any one of claims 1 to 22.

48. A computer program product, comprising instructions, wherein when the instructions are run on a computer, the computer is enabled to perform the method according to any one of claims 1 to 22.
